# EUROPEAN PATENT SPECIFICATION

(11) **EP 4 033 902 B1**
(45) Date of publication and mention of the grant of the patent: **11.03.2026**
(21) Application number: 20868458.9
(22) Date of filing: 28.09.2020
(51) Int. Cl.: A01N 35/00, A01N 37/22, A01N 43/48, C07C 231/00, C07C 233/00, A01P 13/02

(54) **SAFENING RICE AGAINST GROUP 15 HERBICIDES**
SICHERN VON REIS GEGEN HERBIZIDE DER GRUPPE 15
PROTECTION DU RIZ CONTRE LES HERBICIDES DU GROUPE 15

(30) Priority: 27.09.2019 US 201962906902 P
(43) Date of publication of application: 03.08.2022
(73) Proprietor: The Board of Trustees of the University of Arkansas, Little Rock, AR 72207 (US)
(72) Inventor: NORSWORTHY, Jason, Keith, West Fork, AR 72774 (US); BRABHAM, Chad, Springdale, AR 72764 (US)
(74) Representative: Mewburn Ellis LLP
(86) International application number: PCT/US2020/053027
(87) International publication number: WO 2021/062348

(56) References cited:
- CN-A- 102 326 555
- US-A1- 2014 121 104
- US-A1- 2018 192 647
- FOGLEMAN MICHAEL ET AL: "Influence of Formulation and Rate on Rice Tolerance to Early-Season Applications of Acetochlor", vol. 33, no. 2, 11 April 2019 (2019-04-11), US, pages 239 - 245, XP055918778, ISSN: 0890-037X, Retrieved from the Internet <URL:http://dx.doi.org/10.1017/wet.2018.98> DOI: 10.1017/wet.2018.98
- MOLDENHAUER ET AL.: "B. R. Wells Arkansas Rice Research Studies", ARKANSAS AGRICULTURAL EXPERIMENT STATION: RESEARCH SERIES 667, August 2020 (2020-08-01), pages 120 - 122, XP055806944

## Description

### BACKGROUND

Rice is an ancient agricultural crop that remains one of the principal food crops of the world. There are two cultivated species of rice: *Oryza sativa* L., the Asian rice, and O. *glaberrima* Steud., the African rice. *O. sativa* L. constitutes virtually all of the world's cultivated rice and is the species grown in the United States.

Weedy rice (*Oryza sativa* L. var. *sylvatica*), also known as red rice (*Oryza sativa* L.), is one of the most problematic weeds in rice production. While weedy rice plants generally have a higher growth rate and produce more tillers than cultivated rice, they produce far fewer grains. However, since weedy rice is closely related to cultivated rice, it is difficult to selectively control without harming the surrounding rice. Because extra milling is required to remove contaminating weedy rice, even low-level infestations can cause severe yield and quality losses in cultivated rice. Thus, weedy rice increases production costs and lowers the farmers' profit. Unfortunately, weedy rice responds more positively than cultivated rice to elevated CO₂ levels. Thus, the competitive ability of weedy rice is likely to improve with continued climate change, making it an even more serious problem than at present (Agron. J. (2010) 102:118-123).

Prior to the introduction of imidazolinone-resistant (Clearfield^{®} BASF Corporation, Research Triangle Park, NC) rice in 2002, weedy rice was mainly controlled using water seeding and crop rotation with soybean, corn, and grain sorghum (Weed Technology (2008) 22:200-208). The Clearfield^{®} technology was quickly adopted in the mid-southern U.S. because it allowed growers to selectively control troublesome grasses such as weedy rice and barnyardgrass (*Echinochloa crus-galli* (L.) Beauv.) using acetolactate synthase (ALS)-inhibiting herbicides. In 2014, approximately 49% of Arkansas rice acreage was planted to Clearfield^{®} rice (AAES Research Series (2014) 626:11-22), although that percentage has decreased slightly in recent years partly because of weedy rice and barnyardgrass resistance to these herbicides. In the mid-2000s, extensive use of ALS inhibitors such as imazethapyr and imazamox, in addition to poor adherence to stewardship guidelines, quickly led to resistance among several weed populations. To date, eleven species have confirmed resistance to the ALS site of action (SOA) in Arkansas, including weedy rice, barnyardgrass, junglerice, yellow nutsedge, rice flatsedge, and Palmer amaranth (The International Survey of Herbicide Resistant Weeds (2018)). However, the natural hybridization and resulting outcrossing between weedy rice and cultivated rice is largely responsible for the increase in ALS-resistant weedy rice populations (Crop Protection (2007) 26:349-356).

The repetitive use of the same herbicide SOA has been shown to quickly lead to herbicide resistance. When the same SOA is repeatedly targeted, frequency of resistance alleles increases in the population as a function of selection pressure, thereby reducing herbicide efficacy and limiting control options (Weed Science (1996) pp:176-193). However, the evolution of resistance among problematic weeds such as barnyardgrass and weedy rice may be delayed by rotating and mixing different herbicide SOAs (Weed Science (2012) 60:31-62). Because there have been no commercialized herbicides with new SOAs in recent years, growers are limited in effective control options. Thus, there is a need to explore alternative herbicides that may be used to delay resistance and control resistant weeds in rice.

Very long-chain fatty acid (VLCFA)-inhibiting herbicides (WSSA Group 15) are used in row crops for control of annual grasses and small-seeded broadleaves (Weed Technology (2000) 14:161-166; American Journal of Plant Sciences (2014) 5:2040). However, VLCFA-inhibiting herbicides are not labeled for U.S rice production, largely because they are injurious to rice. However, if rice tolerance can be established, VLCFA-inhibiting herbicides would provide an alternative herbicide SOA. Particular application methods, such as fall application prior to planting and slow-release microencapsulated herbicide formulations, have been shown to reduce the injury induced by these herbicides (e.g. microencapsulated acetochlor inWeed technology (2019) 33:239-245). However, no currently available methods reduce injury to commercially acceptable levels. Thus, there is a need in the art for new methods for selectively removing weedy rice and other weeds from cultivated rice without significantly injuring the crop.

### SUMMARY

The present invention provides methods of growing rice. The methods involve treating the rice with fenclorim as a safener and applying delayed preemergence acetochlor, alachlor, metolachor or dimethenamid as only representatives of a microencapsulated Group 15 herbicide to the soil. In preferred embodiments, the safener is fenclorim and the Group 15 herbicide is acetochlor.

The present invention further provides rice plants produced by the methods disclosed herein, as well as seeds produced by said rice plants.

### BRIEF DESCRIPTION OF THE DRAWINGS

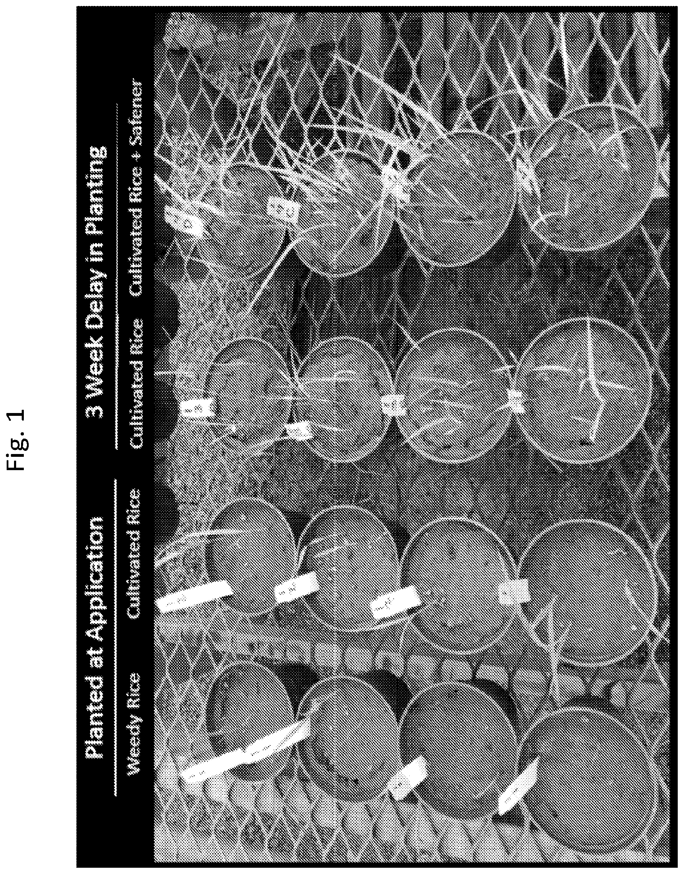

**Fig. 1** is a set of photographs of a greenhouse experiment comparing weedy rice and cultivated rice to which 1,050 grams active ingredient per hectare of microencapsulated (ME) acetochlor (Warrant^{®}, Bayer CropScience, St. Louis, MO) was applied at the same time the seeds were planted with cultivated rice alone or cultivated rice seeds treated with the safener provided herein when the acetochlor was added to the soil three weeks prior to planting. A decreased amount of injury was observed when the herbicide was applied prior to planting and also when the seeds were pre-treated with safener.

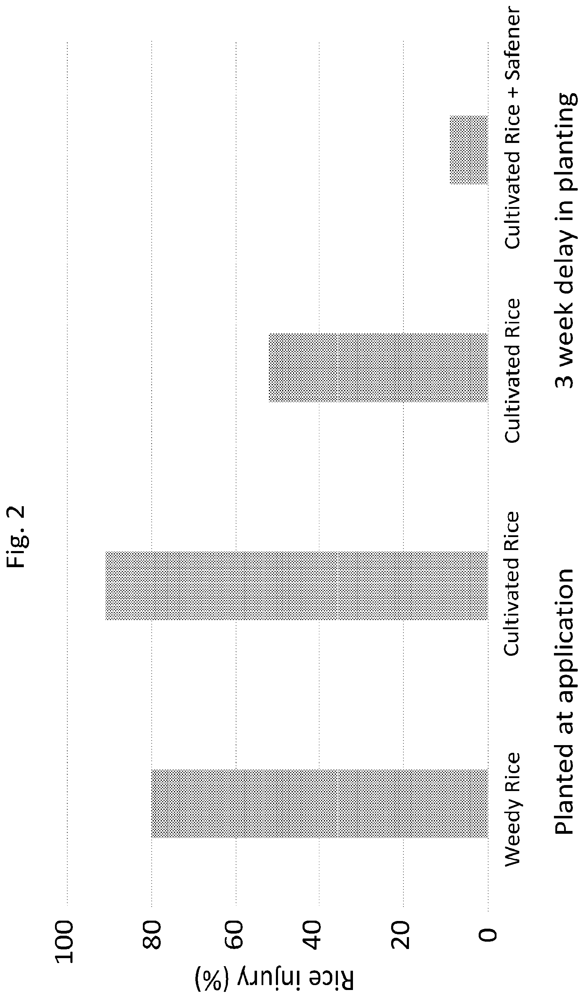

**Fig. 2** is a bar graph showing the results of the greenhouse experiment of Fig. 1 as a percentage of injury to the plants.

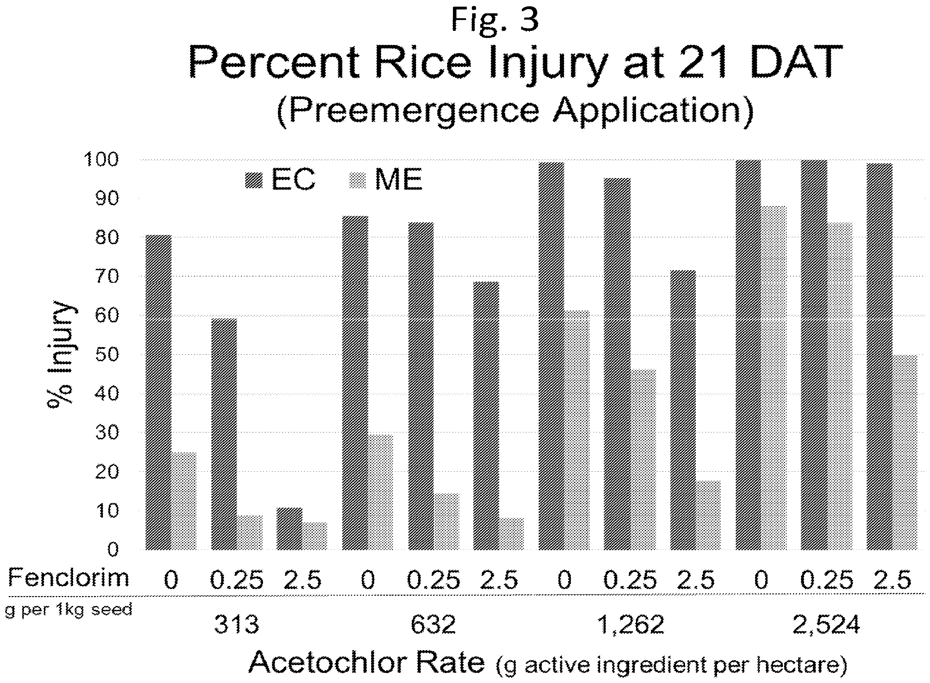

**Fig. 3** is a bar graph showing the percent rice injury 21 days after treatment (DAT) with a combination of the safener fenclorim and the herbicide ME acetochlor, applied preemergence. Acetochlor, formulated as an emulsifiable concentrate (EC; dark gray bars) or microencapsulatated (ME; light gray bars), was applied at rates of 313, 632, 1,262 and 2,524 grams active ingredient per hectare.

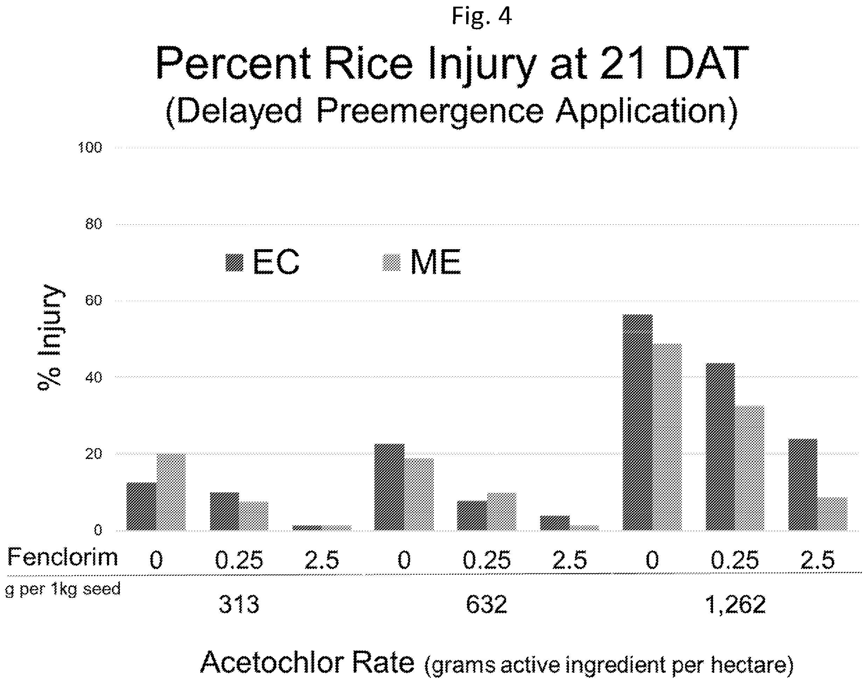

**Fig. 4** is a bar graph showing the percent rice injury 21 days after treatment (DAT) with a combination of the safener fenclorim and the herbicide acetochlor, applied delayed preemergence four days after planting. Acetochlor, formulated as an emulsifiable concentrate (EC; dark gray bars) or microencapsulatated (ME; light gray bars), was applied at rates of 313, 632, and 1,262 grams active ingredient per hectare.

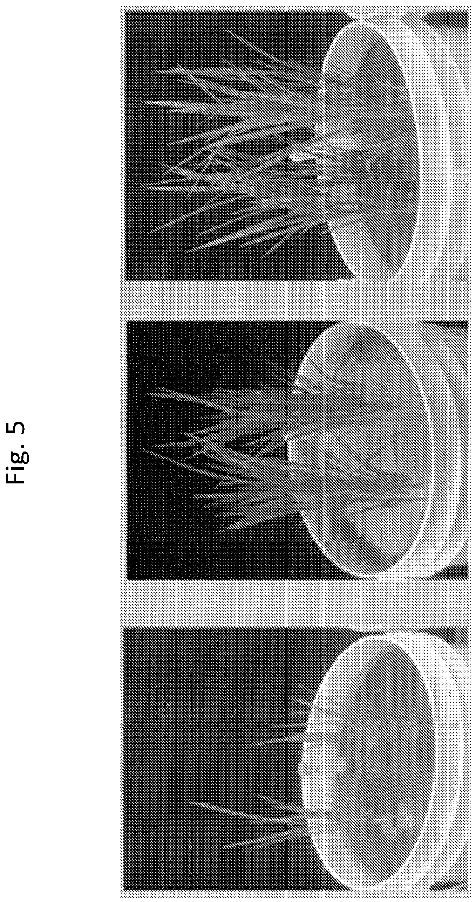

**Fig. 5** is a set of photographs of acetochlor-treated rice (left), nontreated rice (middle), and rice that were treated with a fenclorim seed treatment followed by acetochlor (right) four weeks after application. The ME acetochlor was applied delayed-preemergence.

### DETAILED DESCRIPTION

In accordance with the present invention, it has been discovered that treating rice with both a safener and a microencapsulated Group 15 herbicide reduces rice injury to commercially acceptable levels while still providing effective weedy rice control. In the Examples, rice is treated with a combination of the safener fenclorim and a microencapsulated formulation of the Group 15 herbicide acetochlor. Importantly, the inventors show that application of either fenclorim or microencapsulated acetochlor alone provides only partial protection for rice. Thus, combination of these two treatments is required to achieve adequate tolerance to commercial use rates of Group 15 herbicides.

The present invention provides methods of growing rice, which involve treating the rice with a combination of a safener and a microencapsulated Group 15 herbicide.

### Herbicides

As used herein, the term "herbicide" is used to refer to a substance used to destroy or inhibit unwanted vegetation. Where an herbicide is referenced generically herein by name, unless otherwise restricted, that herbicide includes all commercially available forms known in the art such as salts, esters, free acids and free bases, as well as stereoisomers thereof. Herbicides are commonly used as emulsifiable concentrates (EC). However, in the present invention, the principal herbicide is also utilized in a microencapsulated (ME) formulation in which herbicide molecules are protected from degradation processes by a porous, polymer shell. See for example US Patent No. 9,877,478. When exposed to soil moisture (*e.g*., by an activating rainfall), the polymer shell dissolves and allows a slow release of herbicide. The delayed release of herbicide allows time for rice to imbibe soil water during germination and grow uninhibited for a period following application. In addition, a gradual release of herbicide over time allows the herbicide to provide longer residual control of targeted weeds relative to the EC formulation. In the present application and elsewhere, the inventors have demonstrated that rice is more tolerant to ME herbicide formulations than to EC, likely due to the potential for immediate absorption of herbicide from the EC formulation following rainfall (Weed Technology (2018) 33:239-245).

In microencapsulated formulations, the release rate of the core material can be controlled through selection of several parameters including: the shell wall composition, the weight ratio of the herbicide to shell wall material, the core material components, the mean microcapsule particle size, process conditions such as mixing shear and time, and combinations thereof. In some formulations, a diluent, such as a solvent, may be added to change the solubility characteristics of the core material as to increase or decrease the release rate of the active ingredient from the microcapsule. The diluent may be selected from essentially any of those known in the art, as long as it is compatible with the core material and shell. In some formulations, the core material may comprise a blend of a first and second population of a particulate microencapsulated herbicide provide a multi-modal (*e.g*., bimodal) release rate. Additional ingredients may be added to the core material to improve its properties. Exemplary ingredients include, without limitation, thickeners, stabilizers, anti-packing agents, drift control agents, biocides or preservatives, antifreeze agents, and antifoam agents.

Group 15 herbicides are very-long-chain fatty acid (VLCFA)-inhibitors. Accordingly, the terms "Group 15 herbicide", "VLCA-inhibitor", and "VLCFA-inhibiting herbicide" are used interchangeably throughout the present application. These soil-applied herbicides are primarily absorbed through seedling shoots and roots where they inhibit cell development and cell division. Only five weed species worldwide are resistant to VLCFA-inhibiting herbicides, which suggests there is a lower risk for resistance to this class of herbicides relative to other rice herbicides. The VLCFA-inhibiting herbicides presently used belong to the chloroacetanilide chemical family (acetochlor, alachlor, metolachor and dimethenamid).

While the VLCFA-inhibitors pretilachlor and butachlor are commonly used in Asian rice production, they provide only marginal weed control. Thus, in preferred embodiments, the herbicide used in the present invention provides weed control at commercially acceptable levels. In particularly preferred embodiments, the herbicide acetochlor is utilized. Acetochlor is a widely used VLCFA-inhibitor belonging to the chloroacetamide family. Currently, in the United States, it is labeled for use in corn, cotton, soybean, and grain sorghum. Acetochlor is generally applied preemergence for control of annual grasses and small-seeded broadleaves. Acetochlor is commercially available in a microencapsulated (ME) formulation (Warrant^{®}, Monsanto Company, St. Louis, MO).

In the methods of the present invention, the Group 15 herbicide is applied delayed preemergence. "Delayed preemergence" generally refers to the time at least 4 days after planting and as many as 14 days after planting, when seed has imbibed moisture and sprouted but prior to emergence of the seedlings.

The effective amount of microcapsules to be applied to an agricultural field is dependent upon the identity of the encapsulated herbicide, the release rate of the microcapsules, the crop to be treated, and environmental conditions, especially soil type and moisture. Generally, application rates of herbicides, such as, for example, acetochlor, are on the order of about 0.1, 0.2, 0.5, 1, 2, 3, 4 or 5 kilograms of herbicide per hectare, or ranges thereof, such as from 0.1 to 5 kilograms per hectare, 0.2 to 4 kilograms per hectare, from 0.25 to 2 kilograms per hectare, or from 0.5 to 1 kilograms per hectare. Suitably, an application rate from about 0.25 to about 2 kilograms per hectare is used. In some embodiments, the herbicide is applied at a rate of at least 250 grams active ingredient per hectare. In other embodiments, the herbicide is applied at a rate of at least 1,260 grams active ingredient per hectare.

The methods may be applied in combination with additional herbicides. Applying several herbicides with distinct mechanisms of action may be useful, for example, for treating fields with herbicide-resistant weeds such as barnyardgrass. Exemplary co-herbicides include, without limitation, ACCase inhibitors (*e.g.*, aryloxyphenoxypropionics), enolpyruvyl shikimate-3-phosphate synthaste (EPSPS) inhibitors (*e.g.,* glyphosate), glutamine synthetase inhibitors (*e.g.,* glufosinate), synthetic auxins (*e.g*., aromatic acid, phenoxy and pyridine herbicides), photosystem II (PS II) inhibitors (*e.g.,* ureas and triazines), ALS or AHAS inhibitors (*e.g.,* sulfonylureas, triazolopyrimidines and imidazolinones), photosystem I (PS I) inhibitors (*e.g*., paraquat), protoporphyrinogen oxidase (PPO) inhibitors (*e.g*., diphenyl ethers, phenyl pyrazoles, aryl triazones and oxadiazoles), mitosis inhibitors (*e.g*., anilide, amide, certain organophosphorus and carbanilate herbicides), cellulose inhibitors (*e.g*., nitrile and oxazole herbicides), oxidative phosphorylation uncouplers, dihydropteroate synthase inhibitors, fatty acid and lipid biosynthesis inhibitors (*e.g*., thiocarbamate and certain organophosphorus herbicides), auxin transport inhibitors (*e.g.,* amide and urea herbicides) and carotenoid biosynthesis inhibitors (*e.g.,* isoxazolidinone, benzoylcyclohexanedione and benzoylpyrazole herbicides), salts and esters thereof, and mixtures thereof. In some embodiments of the present invention, the one or more co-herbicides are not encapsulated.

### Safeners

As used herein, the word "safener" is used to refer to compounds that antagonize the harmful effects of an herbicide on cultivated plants. Safeners were formerly referred to as "antidotes", and these terms may be used interchangeably. Preferably, these compounds protect cultivated plants without noticeably influencing the herbicide's action on the weeds that it is meant to control. The methods of the present invention may utilize any safener that protects rice plants against injury from a Group 15 herbicide. In the present invention, the safener is fenclorim (4,6-dichloro-2-phenyl-pyrimidine).

Safeners are most effective when applied prior to or simultaneously with the herbicides whose injury they prevent. Depending on their properties, safeners can be used for pretreating the seeds of the cultivated plants (dressing seeds or seedlings), can be incorporated in the soil (*e.g.,* in the furrow) before or after sowing seeds, or else applied alone or together with the herbicide (*e.g*., as a tank mixture) before or after emergence of the plants. Thus, treatment of the plant or seeds with the safener can be carried out independently of the time of application of the herbicide, or alternatively, the treatment can be carried out simultaneously. In preferred embodiments, the safener is applied to the seeds prior to planting (*i.e.,* by coating the seeds with the safener).

The rate of application in which the safener is applied in relation to the herbicide depend largely on the mode of application. When the safener is applied as a field treatment, either alone or as a tank mixture with the herbicide, the ratio of safener to herbicide is usually from 1:100 to 10:1, but more typically from 1:5 to 8:1. However, when safeners are applied as a seed dressing, much smaller amounts per hectare of crop area are required than when they are applied later. For seed dressing, 0.1 to 10 g of safener is usually required per kg of seeds, with the preferred amount being from 0.1 to 3 g per kg seed.

The safener may be used in an unmodified form or as a composition with conventional adjuvants and carriers. Safeners may be formulated in any known manner, for example, as emulsifiable concentrates, directly sprayable or dilutable solutions, dilute emulsions, wettable powders, soluble powders, dusts, granulates, and also encapsulations in *e.g*. polymer substances. The compositions can also contain further ingredients such as stabilizers, antifoams, viscosity regulators, binders, adhesives, as well as fertilizers or other active compounds, in order to attain special effects.

The safener formulations are prepared in known manner, *e.g*. by mixing and/or grinding the active ingredients with extenders, *e.g*. solvents, solid carriers and, where appropriate, surface-active compounds (surfactants). Suitable safener solvents include without limitation: aromatic hydrocarbons, preferably the fractions containing 8 to 12 carbon atoms, *e.g*. xylene mixtures or substituted naphthalenes, phthalates such as dibutyl phthalate or dioctyl phthalate, aliphatic hydrocarbons such as cyclohexane, or paraffins, alcohols and glycols and their ethers and esters, such as ethanol, ethylene glycol, ethylene glycol monomethyl or monoethyl ether; ketones such as cyclohexanone, strongly polar solvents such as N-methyl-2-pyrrolidone, dimethyl sulfoxide or dimethyl formamide; as well as epoxidised vegetable oils such as epoxidised coconut oil or soybean oil; or water. Suitable solid carriers used *e.g.* for dusts and dispersible powders are normally natural mineral fillers such as calcite, talcum, kaolin, montmorillonite or attapulgite. In order to improve the physical properties it is also possible to add highly dispersed silicic acid or highly dispersed absorbent polymers. Suitable granulated adsorptive carriers are porous types, for example pumice, broken brick, sepiolite or bentonite; and suitable nonsorbent carriers are materials such as calcite or sand. In addition, a great number of pregranulated materials of inorganic or organic nature can be used, *e.g*. especially dolomite or pulverized plant residues. Depending on the nature of the safener to be formulated, suitable surface-active compounds are nonionic, cationic and/or anionic surfactants having good emulsifying, dispersing and wetting properties. The surfactants customarily employed in such formulations are described *e.g*. in the following publications: "McCutcheon's Detergents and Emulsifiers Annual", MC Publishing Corp., Ringwood, N.J., 1979; Sisely and Wood, "Encyclopedia of Surface Active Agents", Chemical Publishing Co. Inc., New York, 1964.

At the molecular level, herbicides and their respective safeners are usually quite similar. Thus, safeners may act either as "bioregulators" that influence the amount of an herbicide that reaches its target site in an active form or as "antagonists" of herbicides at a similar site of action. While some safeners reduce the amount of herbicide reaching its site of action by reducing the rate of its uptake and/or translocation, most currently developed safeners function by enhancing the rate of metabolic detoxification. Safeners belonging to several chemical classes (*i.e.,* phenylpyrimidines, dichloroacetamides, oxime ethers, and thiazoles) are thought to protect plants against injury from chloroacetanilide herbicides (one class of Group 15 herbicides) by enhancing the conjugation of these herbicides to the reduced form of the thiol glutathione. After an herbicide is conjugated with glutathione in the cytoplasm, it is sequestered in a vacuole for degradation, resulting in its detoxification. Glutathione S-transferase enzymes (GSTs) catalyze conjugation of glutathione to various substrates. Thus, these safeners may function either by elevating the levels of reduced glutathione or by inducing the activity of GSTs.

### Application

The methods of the present invention may be used to grow any cultivated rice variety. Cultivated rice is typically from the genus *Oryza,* and most commonly from the species *Oryza sativa* and *Oryza glaberrima.* The rice utilized in the present invention may include both non-traited rice and traited rice varieties. As used herein, the term "traited rice" is used to refer to rice with an herbicide resistance trait. Commonly used traited rice varieties include imidazolinone-resistant (Clearfield^{®}, BASF Corporation, Research Triangle Park, NC) rice and quizalofop-resistant (Provisia^{®}, BASF Corporation, Research Triangle Park, NC) rice. While these traited varieties are exceptionally popular, extensive use of certain inhibitors used with these varieties and poor adherence to stewardship guidelines has quickly led to the development of resistance among several weed populations. Thus, the methods of the present invention, which utilize an herbicide with a distinct site of action, are especially useful for growing traited varieties plagued by resistant weeds. Specific cultivars that may be used with the methods provided herein include, but are not limited to, rice cultivar Diamond, Titan, FP 7521, FP 7321, PVL01, and PVL02.

The rice treated with the methods of the present invention may be planted using several techniques. In the United States, rice production is broadly categorized as either dry-seeded or water-seeded. In the dry-seeded system, rice is sown into a prepared seedbed with a grain drill or by broadcasting the seed and incorporating it with a disk or harrow. Moisture for seed germination is then provided by irrigation or rainfall. In preferred embodiments, the safener is applied to the rice seeds as a dusting or concentrated formulation, and the seeds are planted by a dry-seeded method. In contrast, in water-seeded systems, rice seed is soaked for 12 to 36 hours to initiate germination, and the seed is broadcast by airplane into a flooded field. The seedlings emerge through a shallow flood, or the water may be drained from the field for a short period of time to enhance seedling establishment. Thus, in embodiments in which a water-seeded system are utilized, the safener may be applied in the soaking solution used to initiate germination.

Further, the rice treated with the methods of the present invention may be grown in unfavorable environmental conditions. Specifically, the inventors have demonstrated that the methods may be used in cool, moist conditions (*see* Example 5). Thus, in some embodiments, the rice is grown in cool and moist environmental conditions. Temperatures ranging from 10-15°C can result in cold damage to rice plants, depending on the reproductive stage of the plant. Thus, a climate with night temperatures that average between 10°C and 16°C and/or day temperatures that average between 20°C and 27°C may be considered "cool" for growing rice. As used herein, "moist" conditions for growing rice include those in which soil moisture averages 70%-90%.

The experiment was conducted within a growth chamber at 13.8°C (night) and 23.8°C (day) using a 10-hour night and 14-hour day photoperiod. Diamond rice was planted in pots filled to the same weight of soil to maintain 80% soil moisture throughout the experiment. Treatments consisted of an application of ME acetochlor at 0 and 1,050 g ai ha⁻¹ and a fenclorim seed treatment of 0 and 2.5 g ai kg⁻¹ seed. Data were analyzed using R and subjected to ANOVA. Means were separated using Fisher's LSD (α = 0.05).

The methods of the present invention may be useful for controlling a wide variety of weeds, *i.e.,* plants that are considered a nuisance or a competitor of commercially important crop plants. Examples of weeds that may be controlled according to the method of the present invention include, but are not limited to, barnyardgrass (*Echinochloa crus-galli*) and other weed species within the *Echinochloa* genus, crabgrasses within the genus *Digitaria,* Palmer amaranth (*Amaranthus palmeri*) and other weed species within the *Amaranthus* genus, common purslane (*Portulaca oleracea*) and other weed species in the *Portulaca genus, Chenopodium album* and other *Chenopodium* spp., *Setaria lutescens* and other *Setaria* spp., *Solanum nigrum* and other *Solanum* spp., *Lolium multiflorum* and other *Lolium* spp., *Brachiaria platyphylla* and other *Brachiaria* spp., *Conyza canadensis* and other *Conyza* spp., and *Eleusine indica.* In certain preferred embodiments, the weed species is *Oryza sativa* L. var. *sylvatica* (weedy rice) or *Oryza sativa* L. (red rice).

As further used herein, "weed control" refers to any observable measure of control of plant growth, which can include one or more of the actions of (1) killing, (2) inhibiting growth, reproduction or proliferation, and (3) removing, destroying, or otherwise diminishing the occurrence and activity of plants. Weed control can be measured by any of the various methods known in the art. For example, weed control can be determined as a percentage as compared to untreated plants following a standard procedure wherein plant mortality and growth reduction is visually assessed by one skilled in the art. Control may be defined, for instance, in terms of mean plant weight reduction or percentage of plants that fail to emerge following preemergence herbicide application. A "commercially acceptable rate of weed control" varies with the weed species, degree of infestation, environmental conditions, and the associated crop plant. Commercially effective weed control may be defined as the destruction (or inhibition) of at least about 50%, 55%, 60%, 65%, 70%, 75%, 80%, or even at least 85%, or even at least 90%. Although it is generally preferable from a commercial viewpoint that 80% or more of the weeds be destroyed, commercially acceptable weed control can occur at much lower destruction or inhibition levels, particularly with some very noxious, herbicide-resistant plants. Advantageously, the herbicidal microcapsules used in accordance with the present invention achieve commercially acceptable weed control in the time period of from application to 3 weeks, 4 weeks, 5 weeks, 6 weeks, 7 weeks, 8 weeks, 9 weeks, 10 weeks, 11 weeks, or even 12 weeks after application of the herbicide microcapsules.

Crop injury can be measured by any means known in the art, such as those described above for weed control determination. A "commercially acceptable rate of crop injury" for the present invention likewise varies with the crop plant species. Typically, a commercially acceptable rate of crop injury is defined less than about 20%, 18%, 16%, 15%, 13%, 12%, 11%, 10% or even less than about 5%. The methods of the present invention limit crop injury to a commercially acceptable rate as measured from about 24 hours (about 1 DAT) after application to three weeks (about 21 DAT). All percentages referring to amounts are by weight unless indicated otherwise.

The following examples are meant only to be illustrative.

### EXAMPLES

In previous studies, we determined rice tolerance to the Group 15 herbicide acetochlor is improved by providing this herbicide in a microencapsulated (ME), slow-release formulation (Weed Technology (2018) 33:239-245). In the following Example, rice was treated with a combination of a ME acetochlor and the safener fenclorim. Fenclorim was applied as a seed treatment, and ME acetochlor was applied either preemergence or delayed preemergence. Only the delayed preemergence treatment belongs to the present invention.

### Example 1: Greenhouse study

To determine if timing of herbicide application or any other process would enable the use of Group 15 herbicides on rice, we performed several greenhouse experiments. **Fig. 1** is a set of photographs of a greenhouse experiment demonstrating that the Group 15 herbicide acetochlor was able to effectively reduce weedy rice growth when applied at planting. However, when microencapsulated (ME) acetochlor was applied to rice crops at planting, it caused a great deal of damage to the rice (over 80% injury), as reported in **Fig. 2****.** In contrast, when acetochlor was applied three weeks prior to planting, the injury to the rice crop was reduced to about 50%, which is still too much injury for commercial use. Finally, cultivated rice seeds were treated with the safener fenclorim and the ME acetochlor herbicide was applied to the soil three weeks prior to planting. In this experiment, the injury to the rice was only about 10% (*see* **Fig. 2****),** which would be acceptable for commercial use.

### Example 2: Field study

### Materials and Methods:

Field experiments were conducted to assess the tolerance of fenclorim-safened rice to different rates, timings, and formulations of acetochlor. All experiments were conducted in a silt loam soil. Prior to experimentation, seeds of the rice cultivar, Diamond, were coated with fenclorim at 0, 0.25, or 2.5 grams per kilogram of seed (g kg seed⁻¹) using standard procedures. Experiments were setup using a split-plot design with acetochlor rate and formulation as the main plot and fenclorim treated seeds as the subplot. Treatments were replicated four times. Each plot was 2.2 m wide by 1.5 m long and surrounded by a 1.5 m border. In each plot, rice seeds were hand planted at 22 seeds per 0.3 m in furrows spaced 15 cm apart created by a 10-row cone drill planter. Seeds treated with fenclorim at 0, 0.25, and 2.5 g kg seed⁻¹ were planted into rows 2 and 3, 5 and 6, and 8 and 9, respectively.

### Results:

### Treatment 1: Acetochlor applied preemergence

Acetochlor formulated as an emulsifiable concentrate (EC, Harness^{®}) or microencapsulated (ME, Warrant^{®}) was applied preemergence at the equivalent acetochlor rates of 313, 632, 1,262 and 2,524 grams active ingredient per hectare (g ai ha⁻¹). Applications were made using a CO₂-pressurized backpack sprayer fitted with a 110015 AIXR nozzles calibrated to deliver 140 liters per hectare (L ha⁻¹) at 4.8 kilometers per hour (km hr⁻¹). Afterwards, plots were irrigated using an overhead lateral irrigation system to incorporate herbicides into the soil solution. At 21 days post-treatment, rice injury was recorded and the results are presented in **Fig. 3****.**

### Treatment 2: Acetrochlor applied delayed preemergence

Acetochlor formulated as an emulsifiable concentrate (EC, Harness^{®}) or microencapsulatated (ME, Warrant^{®}) was applied delayed preemergence at the equivalent acetochlor rates of 313, 632, and 1,262 g ai ha⁻¹. Applications were made using a CO₂-pressurized backpack sprayer fitted with a 110015 AIXR nozzles calibrated to deliver 140 L ha⁻¹ at 4.8 km hr⁻¹. After rice seeds were planted, the plots were irrigated overhead with a lateral irrigation system to promote rice germination. Herbicide treatments were applied four days later, and herbicides were incorporated into soil solution by a natural rain event two days later. The coleoptile of rice plants was beginning to protrude from the soil at this time (spiking stage). At 21 days post-treatment, rice injury was recorded and the results are presented in **Fig. 4****.**

### Conclusions:

Rice treated with a combination of a microencapsulated acetochlor and the safener fenclorim displayed increased herbicide tolerance, enabling the robust Group 15 herbicide acetochlor to be used to control grass weeds such as weedy rice. While this combination treatment is effective both when the acetochlor is applied preemergence and when it is applied delayed preemergence, the most dramatic reduction in rice injury was observed with the delayed application.

### Example 3: Tolerance of Rice to Preemergence (PRE) and Delayed-Preemergence (DPRE) Applications of Microencapsulated (ME) Acetochlor

An experiment was conducted in the Spring of 2020 to determine if a fenclorim rice seed treatment provides enhanced rice crop tolerance to microencapsulated (ME) acetochlor under typical planting conditions. The rice cultivar 'Diamond' was planted at 72 seeds m⁻¹ row. Rice plots were treated using standard small-plot research application practices. Treatments consisted of two application timings [preemergence (PRE) and delayed-preemergence (DPRE)], three rates of ME acetochlor (0, 1,260, and 1,890 g ai ha⁻¹), and a fenclorim seed treatment (0 and 2.5 g ai kg⁻¹ seed). Data were analyzed using R, subjected to analysis of variance (ANOVA), and means were separated using Fisher's LSD (α = 0.05).

**Table 1: Stand reduction of Diamond rice caused by ME acetochlor relative to the nontreated check averaged over application timing and rate three weeks after treatment.**

| Fenclorim SDTR^{a} rate (g ai kg⁻¹ seed) | Stand reduction (%) |
|---|---|
| 0 | 30 a^{b} |
| 2.5 | 13 b |

| | |
|---|---|
| ^{a} Seed treatment ^{b} Different letters within a column indicate a significant difference between treatments; means separated using Fisher's LSD at α=0.05 | |

**Table 2: Stand reduction of Diamond rice relative to the nontreated check 3 weeks after treatment.**

| Application timing | Acetochlor rate (g ai ha⁻¹) | Fenclorim SDTR^{a} | Stand reduction (%) |
|---|---|---|---|
| PRE | 1,260 | 0 | 23 BC^{b} |
| | | 2.5 | 13 D |
| | 1,890 | 0 | 33 A |
| | | 2.5 | 16 CD |
| DPRE | 1,260 | 0 | 34 A |
| | | 2.5 | 13 D |
| | 1,890 | 0 | 28 AB |
| | | 2.5 | 10 D |

| | | | |
|---|---|---|---|
| ^{a} Seed treatment g ai kg⁻¹ seed ^{b} Means within a column followed by the same letter are not significantly different based on Fisher's LSD at α=0.05 | | | |

### Conclusions:

The fenclorim seed treatment demonstrated safening effects in the form of reduced stand loss from ME acetochlor. Averaged over application timing and acetochlor rate, stand loss from acetochlor was reduced by greater than 50% **(Table 1).** Though insignificant, when comparing treatments with PRE and DPRE application timings as well as acetochlor rates, stand reduction was greater in plots without the seed treatment of fenclorim **(Table 2).** Stand reduction was no more than 16% for treatments including the fenclorim seed treatment with the PRE application timing and no more than 13% with the DPRE application timing.

### Example 4: Tolerance of Multiple Rice Cultivars to ME Acetochlor Using a Fenclorim Seed Treatment.

An experiment was conducted in the Spring of 2020 to determine cultivar response to a fenclorim rice seed treatment and ME acetochlor. Two inbred rice cultivars ('Diamond' and 'Titan') and two hybrid cultivars ('FP 7521' and 'FP 7321') were planted at 72 and 36 seeds m⁻¹ row, respectively. Rice plots were treated using standard small-plot research application practices. Treatments consisted of an application of ME acetochlor at 0 and 1,260 g ai ha⁻¹ and a fenclorim seed treatment of 0, 2.5, and 5.0 g ai kg⁻¹ seed. Cultivars were analyzed separately using R and subjected to ANOVA, and means were separated using Fisher's LSD (α = 0.05).

**Table 3. Visual rice groundcover of four cultivars in response to ME acetochlor rate six weeks after crop emergence.**

| | | Groundcover (%) | | | |
|---|---|---|---|---|---|
| ME acetochlor^{a} | SDTR^{b} | Diamond | Titan | FP 7521 | FP 7321 |
| 0 | 0 | 87 A^{c} | 81 AB | 97 A | 74 A |
| | 2.5 | 80 AB | 91 A | 96 A | 96 A |
| | 5.0 | 81 AB | 96 A | 93 AB | 94 A |
| 1,260 | 0 | 69 C | 59 B | 75 BC | 74 A |
| | 2.5 | 73 BC | 89 A | 74 C | 86 A |
| | 5.0 | 81 AB | 89 A | 85 ABC | 73 A |

| | | | | | |
|---|---|---|---|---|---|
| ^{a} g ai ha⁻¹ ^{b} Fenclorim seed treatment (g ai kg⁻¹ seed) ^{c} Means within a column followed by the same letter are not significantly different based on Fisher's LSD at α=0.05 | | | | | |

**Table 4. Injury and stand reduction for four rice cultivars caused by ME acetochlor three weeks after crop emergence.**

| | | Injury (%) | | | | Stand reduction (%) | | | |
|---|---|---|---|---|---|---|---|---|---|
| ME acetochlor^{a} | SDTR^{b} | Diamond | Titan | FP 7521 | FP 7321 | Diamond | Titan | FP 7521 | FP 7321 |
| 0 | 0 | 0 C^{c} | 0 B | 0 B | 0 B | 0 D | 0 B | 0 B | 0 C |
| | 2.5 | 6 BC | 5 AB | 1 B | 2 B | 15 CD | 5 B | 12 AB | 6 BC |
| | 5.0 | 5 BC | 3 B | 4 B | 3 B | 17 CD | 7 B | 18 AB | 26 AB |
| 1,260 | 0 | 17 A | 30 A | 24 A | 24 A | 39 A | 40 A | 34 A | 35 A |
| | 2.5 | 12 AB | 4 AB | 5 B | 5 AB | 33 AB | 18 AB | 16 AB | 23 AB |
| | 5.0 | 5 BC | 5 AB | 5 B | 10 AB | 17 B | 18 AB | 18 AB | 16 ABC |

| | | | | | | | | | |
|---|---|---|---|---|---|---|---|---|---|
| ^{a} g ai ha⁻¹ ^{b} Fenclorim seed treatment (g ai kg⁻¹ seed) ^{c} Means within a column followed by the same letter are not significantly different based on Fisher's LSD at α=0.05 | | | | | | | | | |

### Conclusions:

Results from the cultivar study demonstrate the safening effect of the fenclorim seed treatment. Safening effects can be observed from the groundcover data at six weeks after treatment **(Table 3).** As the fenclorim seed treatment rate was increased, stand loss and injury generally decreased **(Table 4).** The fenclorim seed treatment provided a positive response in canopy closure of rice cultivar Titan without the acetochlor treatment. Furthermore, in plots treated with acetochlor, the fenclorim seed treatment improved canopy closure, indicative of the safening by the seed treatment for all cultivars.

### Example 5: Tolerance of Rice to ME Acetochlor under Cold and Moist Soil Conditions

An experiment was conducted in Fall of 2019 to determine tolerance of rice to ME acetochlor when treated with a fenclorim rice seed treatment under cold and moist environmental conditions. The experiment was conducted within a growth chamber at 13.8°C (night) and 23.8°C (day) using a 10-hour night and 14-hour day photoperiod. Diamond rice was planted in pots filled to the same weight of soil to maintain 80% soil moisture throughout the experiment. Treatments consisted of an application of ME acetochlor at 0 and 1,050 g ai ha⁻¹ and a fenclorim seed treatment of 0 and 2.5 g ai kg⁻¹ seed. Data were analyzed using R and subjected to ANOVA. Means were separated using Fisher's LSD (α = 0.05).

**Table 5. Injury and stand reduction to rice caused by ME acetochlor in a growth chamber experiment under adverse conditions for rice emergence and growth.**

| | | 3 WAA^{a} | | 4 WAA | |
|---|---|---|---|---|---|
| ME acetochlor^{b} | SDTR^{c} | Stand reduction^{d} (%) | Injury (%) | Height (cm) | Biomass (%) |
| 0 | 0 | 0 B^{e} | 0 B | 14.1 A | 100 A |
| | 2.5 | 3 B | 0 B | 13.7 A | 99 A |
| 1,050 | 0 | 38 A | 32 A | 11.1 B | 68 B |
| | 2.5 | 4 B | 3 B | 13.8 A | 105 A |

| | | | | | |
|---|---|---|---|---|---|
| ^{a} Weeks after application ^{b} rate in g ai ha⁻¹ ^{c} Fenclorim seed treatment (g ai kg⁻¹-seed) ^{d} Stand reduction, injury, and biomass were made relative to the 0 acetochlor and 0 fenclorim treatments ^{e} Means within a column followed by the same letter are not significantly different based on Fisher's LSD at α=0.05 | | | | | |

Under cool, moist conditions, the fenclorim seed treatment provided adequate safety to ME acetochlor **(Table 5).** In evaluations taken at three weeks after application (WAA) and four WAA, rice treated with both the fenclorim seed treatment and ME acetochlor was not significantly different from nontreated rice. **Fig. 5** illustrates the safening effect observed in the growth chamber.

### Example 6: Weed Control and Rice Tolerance with ME Acetochlor and a Fenclorim Seed Treatment.

An experiment was conducted in the Spring of 2020 to determine the control of barnyardgrass and weedy rice in cultivated rice to ME acetochlor when treated with a fenclorim rice seed treatment. The experiment was conducted under standard small-plot research practices. Diamond rice was planted at 72 seeds m⁻¹ row. Treatments consisted of an application of ME acetochlor at four application timings (preemergence, delayed-preemergence, spiking, and 1-leaf), three application rates (630, 1,260, and 1,890 g ai ha⁻¹), and a fenclorim seed treatment of 0 and 2.5 g ai kg⁻¹-seed. Data were analyzed using R and subjected ANOVA. Means were separated using Fisher's LSD (α = 0.05).

**Table 6. Weedy rice and barnyardgrass control 3 WAA +/- 3 days.**

| Application timing | Acetochlor rate (g ai ha⁻¹) | BYG^{b} control (%) | WR^{c} control (%) |
|---|---|---|---|
| Preemergence | 630 | 56 CD^{d} | 36 CD |
| | 1,260 | 83 A | 56 AB |
| | 1,890 | 86 A | 60 AB |
| Delayed-Preemergence | 630 | 73 ABC | 47 BC |
| | 1,260 | 88 A | 71 A |
| | 1,890 | 86 A | 63 AB |
| Spiking | 630 | 76 ABC | 20 D |
| | 1,260 | 61 BCD | 29 CD |
| | 1,890 | 80 AB | 59 AB |
| 1 - Leaf | 630 | 58 CD | 31 CD |
| | 1,260 | 43 D | 26 D |
| | 1,890 | 69 ABC | 56 AB |

| | | | |
|---|---|---|---|
| ^{a} Seed treatment g ai kg⁻¹-seed ^{b} Barnyardgrass ^{c} WR - Weedy rice or red rice ^{d} Means within a column followed by the same letter are not significantly different based on Fisher's LSD at α=0.05 | | | |

**Table 7. Cultivated rice injury caused by ME acetochlor averaged over application timing three WAA +/- 3 days**

| Acetochlor rate (g ai ha⁻¹) | Fenclorim SDTR^{a} | Injury |
|---|---|---|
| 630 | 0 | 17 BC^{b} |
| | 2.5 | 8 C |
| 1,260 | 0 | 38 A |
| | 2.5 | 16 BC |
| 1,890 | 0 | 48 A |
| | 2.5 | 20 B |

| | | |
|---|---|---|
| ^{a} Seed treatment g ai kg⁻¹-seed ^{b} Means within a column followed by the same letter are not significantly different based on Fisher's LSD at α=0.05 | | |

For PRE and DPRE applications of ME acetochlor (1,260 and 1,890 g ai ha⁻¹), the herbicide provided greater than 80% barnyardgrass control and greater than 50% weedy rice control **(Table 6).** In the absence of a fenclorim seed treatment, it would be impossible to safely remove weedy rice from cultivated rice. Additionally, the fenclorim seed treatment also reduced the level of injury observed from ME acetochlor applications, and the seed treatment did not negatively affect weed control **(Table 7).**

## Claims

1. A method of growing rice comprising treating the rice seed with a safener and applying an herbicide to the soil, wherein the safener is fenclorim, wherein the herbicide is a Group 15 herbicide selected from the group consisting of acetochlor, metolachlor, dimethenamid, and alachlor, wherein the herbicide is applied delayed preemergence, and wherein the herbicide is microencapsulated.

2. The method of claim 1, wherein the herbicide is applied at a rate of at least 250 grams active ingredient per hectare, optionally wherein the herbicide is applied at a rate of at least 1,260 grams active ingredient per hectare.

3. The method of any one of the preceding claims, wherein the safener is applied to the rice seeds prior to planting, optionally wherein the rice seed is coated with the safener prior to planting.

4. The method of any one of the preceding claims, wherein the rice is *Oryza sativa* L.

5. The method of any one of the preceding claims, wherein the rice is drill-seeded.

6. The method of any one of the preceding claims, wherein weeds are controlled by the herbicide.

7. The method of claim 6, wherein the herbicide controls barnyardgrass and/or weedy rice.

8. The method of claim 6, wherein the rate of weed control is at least 50%.

9. The method of any one of the preceding claims, wherein the method leads to reduced crop injury and/or reduced stand reduction caused by the herbicide as compared to crops treated with the herbicide alone, and optionally wherein the rate of crop injury is no more than 20% and/or the rate of stand reduction is no more than 20%.

10. The method of any one of the preceding claims, wherein a commercially acceptable rate of weed control and a commercially acceptable rate of crop injury are simultaneously attained.

11. The method of claim 1, wherein the herbicide is acetochlor, wherein the safener is fenclorim, and wherein the safener is applied to the rice seeds prior to planting.

12. The method of any one of the preceding claims, wherein the rice is grown in cool and moist environmental conditions.

## Patentansprüche

1. Verfahren zum Anbauen von Reis, welches das Behandeln der Reissamen mit einem Safener und das Ausbringen eines Herbizids auf den Boden umfasst, wobei der Safener Fenclorim ist, wobei das Herbizid ein Herbizid der Gruppe 15 ist, das aus der aus Acetochlor, Metolachlor, Dimethenamid und Alachlor bestehenden Gruppe ausgewählt ist, wobei das Herbizid verzögert vor dem Auflaufen ausgebracht wird und wobei das Herbizid mikroverkapselt ist.

2. Verfahren nach Anspruch 1, wobei das Herbizid in einer Menge von zumindest 250 Gramm aktivem Wirkbestandteil pro Hektar ausgebracht wird, wobei das Herbizid gegebenenfalls in einer Menge von zumindest 1.260 Gramm Wirkbestandteil pro Hektar ausgebracht wird.

3. Verfahren nach einem der vorangegangenen Ansprüche, wobei der Safener vor dem Pflanzen auf die Reissamen angewandt wird, wobei die Reissamen gegebenenfalls vor dem Pflanzen mit dem Safener beschichtet werden.

4. Verfahren nach einem der vorangegangenen Ansprüche, wobei der Reis Oryza sativa L. ist.

5. Verfahren nach einem der vorangegangenen Ansprüche, wobei der Reis durch Drillsaat ausgesät wird.

6. Verfahren nach einem der vorangegangenen Ansprüche, wobei Unkräuter durch das Herbizid bekämpft werden.

7. Verfahren nach Anspruch 6, wobei das Herbizid Hühnerhirse und/oder Unkrautreis bekämpft.

8. Verfahren nach Anspruch 6, wobei die Unkrautbekämpfungsrate zumindest 50 % beträgt.

9. Verfahren nach einem der vorangegangenen Ansprüche, wobei das Verfahren zu geringeren Pflanzenschädigungen und/oder geringerer Standreduktion führt, die durch das Herbizid verursacht werden, als bei Pflanzenbeständen, die mit dem Herbizid alleine behandelt wurden, und wobei die Pflanzenschädigungsrate nicht mehr als 20 % beträgt und/oder die Standreduktionsrate nicht mehr als 20 % beträgt.

10. Verfahren nach einem der vorangegangenen Ansprüche, wobei gleichzeitig eine kommerziell annehmbare Unkrautbekämpfungsrate und eine kommerziell annehmbare Standreduktionsrate erzielt werden.

11. Verfahren nach Anspruch 1, wobei das Herbizid Acetochlor ist, wobei der Safener Fenclorim ist und wobei der Safener vor dem Pflanzen auf die Reissamen angewandt wird.

12. Verfahren nach einem der vorangegangenen Ansprüche, wobei der Reis unter kühlen und feuchten Umgebungsbedingungen angebaut wird.

## Revendications

1. Procédé de culture de riz comprenant le traitement de la graine de riz avec un phytoprotecteur et l'application d'un herbicide sur le sol, dans lequel le phytoprotecteur est le fenclorim, dans lequel l'herbicide est un herbicide du Groupe 15 choisi dans le groupe comprenant l'acétochlore, le métolachlore, le diméthénamide et l'alachlore, dans lequel l'herbicide est appliqué à pré-émergence retardée, et dans lequel l'herbicide est micro-encapsulé.

2. Procédé selon la revendication 1, dans lequel l'herbicide est appliqué à un débit d'au moins 250 grammes d'ingrédient actif par hectare, facultativement dans lequel l'herbicide est appliqué à un débit d'au moins 1 260 grammes d'ingrédient actif par hectare.

3. Procédé selon l'une quelconque des revendications précédentes, dans lequel le phytoprotecteur est appliqué aux graines de riz avant la plantation, facultativement dans lequel les graines de riz sont revêtues du phytoprotecteur avant la plantation.

4. Procédé selon l'une quelconque des revendications précédentes, dans lequel le riz est *Oryza sativa* L.

5. Procédé selon l'une quelconque des revendications précédentes, dans lequel le riz est semé par semis direct.

6. Procédé selon l'une quelconque des revendications précédentes, dans lequel les mauvaises herbes sont contrôlées par l'herbicide.

7. Procédé selon la revendication 6, dans lequel l'herbicide contrôle l'échinochloa pied-de-coq et/ou le riz herbacé.

8. Procédé selon la revendication 6, dans lequel le taux de désherbage est d'au moins 50 %.

9. Procédé selon l'une quelconque des revendications précédentes, dans lequel le procédé conduit à des dommages aux cultures réduits et/ou à une réduction de peuplement réduite causé(e)s par l'herbicide par rapport aux cultures traitées avec l'herbicide seul, et facultativement dans lequel le taux de dommages aux cultures n'est pas supérieur à 20 % et/ou le taux de réduction de peuplement n'est pas supérieur à 20 %.

10. Procédé selon l'une quelconque des revendications précédentes, dans lequel un taux commercialement acceptable de lutte contre les mauvaises herbes et un taux commercialement acceptable de dommages aux cultures sont atteints simultanément.

11. Procédé selon la revendication 1, dans lequel l'herbicide est l'acétochlore, dans lequel le phytoprotecteur est le fenclorim, et dans lequel le phytoprotecteur est appliqué aux graines de riz avant la plantation.

12. Procédé selon l'une quelconque des revendications précédentes, dans lequel le riz est cultivé dans des conditions environnementales fraîches et humides.
